Europäisches Patentamt

European Patent Office

Office européen des brevets

(19)

(11) Publication number: **0 289 096 B1**

# EUROPEAN PATENT SPECIFICATION

(12)

(45) Date of publication of patent specification :
**12.06.91 Bulletin 91/24**

(51) Int. Cl.⁵ : **A23C 19/082, A23C 19/05, A23C 19/09**

(21) Application number : **88200821.2**

(22) Date of filing : **27.04.88**

(54) **Method for preparing a cheese product.**

(30) Priority : **29.04.87 NL 8701011**

(43) Date of publication of application :
**02.11.88 Bulletin 88/44**

(45) Publication of the grant of the patent :
**12.06.91 Bulletin 91/24**

(84) Designated Contracting States :
**AT BE CH DE ES FR GB GR IT LI LU NL SE**

(56) References cited :
**EP-A- 0 069 591
DE-C- 3 314 551
GB-A- 2 000 010
US-A- 4 582 714**

(73) Proprietor : **VONK HOLDING B.V.
P.O. Box 1240 Energieweg 5
NL-6040 KE Roermond (NL)**

(72) Inventor : **Vonk, Dirk
Messjesstraat 11
B-3760 Lanaken (BE)**

(74) Representative : **Noz, Franciscus Xaverius, Ir.
et al
Algemeen Octrooibureau P.O. Box 645
NL-5600 AP Eindhoven (NL)**

## Description

The invention relates to a method for preparing a resolidified cheese product by mixing the usual starting substances such as cheese, butter and additives. The invention also relates to a method for preparing fresh cream cheese by mixing quark, butter and additives and heating the mixture in order to improve the keeping quality or tenability.

From DE-C-3 314 551 a cheese product is known, being a melt cheese prepared from cheese, butter and additives such as melting salts, which melting salts have been used in the amount of 1.0-2.2 wt.%. The addition of the melting salts gives the end product a salty taste which is undesired in some circumstances, but the addition of the salts is required from some technical properties of the melt cheese. The object of the invention is to replace the salts by additives which do not give the cheese a salty taste and by which addition the properties can be maintained.

From Hess, Wiener Küche, Wien 1962, page 298 reciptes have been disclosed for food products such as creams going out from butter or cream, gelatine and polysacharides as binding agents in concentrations up to 5%.

Fresh cream cheese is a cheese product which is composed on the basis of quark, to which there is added fresh milk or butter, and this cheese product is flavoured by means of herbs, garlic, paprika, peppers and the like. Said fresh cream cheese is available on the market in relatively small packing units such as a packing unit of 50 g or 100 g. A disadvantage of the fresh cream cheese now on the market is its weak tenability. The packed fresh cream cheese must be stored in a refrigerator and even then the quality can only be maintained for about one month. The tenability might be enhanced by adding preserving agents, various examples of which are described in the handbook "Processed Cheese Manufacture" by Dr. Albert Meyer, published by Food Trade Press Ltd., London, 1973, pp. 95-98. Adding preserving agents such as esters of benzoic acid, salicylic acid or para-hydroxybenzoic acid or sodium sulphite involves that some of these substances have disadvantageous side effects, so that in cheese making one does not like to use such preserving agents. Also it would be possible to sterilize the melted cheese product by heating over 100°C, but it has appeared that such a cheese composition can only be heated to 80°C, because above this temperature there will be decomposition of the various milk-quark products, which decomposition is not reversible any more when the temperature is lowered. Because of these problems the fresh cream cheese that we know now can only be maintained in quality for a limited period of time. However, a method has been developed now to make it possible to maintain the fresh cream cheese for about 6 months, without it being necessary to store said cheese product in a refrigerator at a temperature lower than room temperature.

An other spreadable cheese product is resolidified cheese, as already said before, the composition and way of production of which is regulated by the authorities in the "Landbouwkwaliteitswet" (Agricultural Quality Act), whereby Section 1 gives a definition of the various cheese products, such as of resolidified cheese, and the regulations with regard to resolidified cheese and resolidified cheese products are worked out in more detail in Chapter 7, Section 117 et seq. Within the framework of the present invention it is important that in this production cheese is melted and melting salts, such as phosphates and citrates, are added, whereby the cheese product obtained has become spreadable after cooling. Dependent on the quantity of salts to be added the viscosity of the resolidified cheese can be varied, so that cheese spread having the highest content of melting salts, slices of cheese, whereby one slice is packed in foil, and resolidified cheese in block form, which is i.a. used for grating cheese, are obtained. Because of the relatively high salt content the disadvantage of the resolidified cheese is, however, that it is less wanted by a certain group of consumers or that it is less well digested by said group of consumers. Now a method has been found for making a cheese product without it being necessary to use the melting salts used so far, so that it is now possible to make a resolidified cheese product which can be consumed by a larger number of consumers and is considered to be healthier.

Consequently the method according to the invention for preparing a resolidified cheese product as mentioned in the preamble is characterised in that of the additives the melting salts have been replaced substantially completely by a binding agent based on starch, gelatine and polysacharide in a quantity of 0.1-5% by weight of the resolidified cheese product. The agent to be added, indicated as binding agent, is preferably composed of modified starch, gelatine, carob flour and guar flour. These substances are substances known by themselves and mentioned in "Het additievenboekje" (the book of additives), 1985, published by the Staatsuitgeverij (State publishing company), in which the additives are coded with E-numbers. Within this framework modified starch is known under code-number E 1401, gelatine under code-number E 485, carob flour under code-number E 410 and guar flour under code-number E 412.

In the production of resolidified cheese it has become apparent that the use of melting salts can be left out when a mixture of modified starch, gelatine and polysacharides, for which purpose especially carob flour and guar flour are used, is added to the melted cheese. Thus a resolidified cheese having a considerably lower salt content and a finer taste is obtained.

Surprisingly it has appeared that when the agent according to the invention is used in the production of fresh cream cheese it will be possible to heat the mixture of cheese, quark or milk and further additives thus obtained to over 100°C, e.g. to 130°C, without decomposition of proteins in the heated mixture, so that it is now possible to sterilize the fresh cream cheese, as a result of which it will keep considerably longer than the fresh cream cheese known so far. When packing the fresh cream cheese it is preferred to fill the fresh cream cheese in the cups while it is hot and it is especially preferred to supply the packing material to the filling machine as sterile as possible. The sterilization at a high temperature is now also possible for the new resolidified cheese product.

An example of a binding agent which can be used according to the invention is available on the market under the designation Turrisin FK 105 (brand designation) of Giulini Chemie GmbH, Ludwigshafen, Federal Republic of Germany.

The invention will be explained in more detail with reference to the following examples.

Example I

The production of a resolidified cheese product.

To produce a resolidified cheese product in the shape of slices 800 kg of cheese such as Edam, Emmenthal and Cheddar were mixed for 30 minutes with 95 kg of casein, 100 kg of butter and 10 kg of binding agent, available on the market as FK 105. Subsequently the mixture was transferred to a melting machine where it was heated by water/steam to 80-85°C, so that the mixture melted. The mixture stayed in the melting machine for 10-15 minutes. Then the heated mixture was sterilized for a few seconds to a maximum temperature of 130°C, after which the warm resolidified cheese product was sprayed into a foil and cooled, so that solidified cheese was obtained.

Example II

The production of fresh cream cheese.

Binding agent, consisting of modified starch, gelatine, carob flour and guar flour, marketed under the designation FK 105 was in an amount of 0,3 kg mixed with 25 kg of quark and 2 kg of butter, while being heated. After a homogeneous mixture has been obtained said mixture was sterilized by heating it to 130°C and keeping it at this temperature for a few seconds. Then said heated mixture was supplied to a filling machine wherein the mixture was filled while still hot.

Thus a fresh cream cheese was obtained of which the quality could be maintained during 6 months in the sealed packing.

Claims

1. Method for preparing a resolidified cheese product by mixing the usual starting substances such as cheese, butter and additives, characterized in that of the additives the melting salts have been replaced substantially completely by a binding agent based on starch, gelatine and polysacharide in a quantity of 0.1-5% by weight of the resolidified cheese product.

2. Method according to claim 1, characterized in that the melting salts have been replaced completely by a binding agent mixture consisting of modified starch, gelatine, carob flour and guar flour.

3. Method for preparing fresh cream cheese by mixing quark, butter and additives and heating the mixture in order to improve the keeping quality, characterized in that one of the additives is a mixture of starch, gelatine and polysacharide and that the cream cheese mixture is heated to a temperature of 100-135°C.

4. Method according to claim 3, characterized that the additive is a mixture of modified starch, gelatine, carob flour and guar flour.

5. Method according to claims 3-4, characterized in that the cream cheese mixture is filled in the packing material while hot, which packing material is sealed immediately after filling.

6. Method according to claim 5, characterized in that the packing material has been made sterile just before filling.

Ansprüche

1. Verfahren zur Zubereitung eines verfestigten Käseproduktes durch Mischen der üblichen Ausgangsstoffe wie Käse, Butter und Zusätze, dadurch **gekennzeichnet**, daß bei den Zusätzen die Schmelzsalze im wesentlichen vollständig durch ein Bindemittel, welches auf Stärke, Gelatine und Polysacchariden basiert, in einer Menge von 0,1 bis 5% des Gewichtes des verfestigten Käseproduktes ersetzt sind.

2. Verfahren nach Anspruch 1, dadurch **gekennzeichnet**, daß die Schmelzsalze vollständig durch eine Bindemittel-Mischung ersetzt sind, die aus modifizierter Stärke, Gelatine, Carobenmehl und Guarmehl besteht.

3. Verfahren zur Zubereitung von Frischcreme-Käse durch Mischen von Quark, Butter und Zusätzen und Erhitzen der Mischung zum Zwecke der Erhöhung der Haltbarkeit, dadurch **gekennzeichnet**, daß einer der Zusätze eine Mischung aus Stärke, Gelatine und Polysacchariden ist und daß die Cremekäse-Mischung auf eine Temperatur von 100°-135°C erhitzt wird.

4. Verfahren nach Anspruch 3, dadurch **gekennzeichnet**, daß der Zusatz eine Mischung von modifizierter Stärke, Gelatine, Carobenmehl und Guarmehl ist.

5. Verfahren nach den Ansprüchen 3 bis 4, dadurch **gekennzeichnet**, daß die Cremekäsemischung im heißen Zustand in ihre Verpackung eingefüllt wird, welche unmittelbar nach dem Einfüllen verschlossen und versiegelt wird.

6. Verfahren nach Anspruch 5, dadurch **gekennzeichnet**, daß die Verpackung unmittelbar vor dem Einfüllvorgang sterilisiert wird.

**Revendications**

1. Procédé de préparation d'un produit fromager resolidifié en mélangeant les substances de départ habituelles telles que du fromage, du beurre et des additifs, caractérisé en ce que dans les additifs, les sels de fusion ont été remplacés pratiquement complètement par un agent liant à base d'amidon, de gélatine et de polysaccharide dans une quantité de 0,1 à 5% en poids du produit fromager resolidifié.

2. Procédé selon la revendication 1, caractérisé en ce que les sels de fusion ont été remplacés complètement par un mélange d'agent liant qui consiste en de l'amidon modifié, de la gélatine, de la farine de caroube et de la farine de guar.

3. Procédé de préparation d'un fromage à base de crème fraîche en mélangeant du fromage blanc, du beurre et des additifs et en chauffant le mélange de façon à améliorer la qualité de conservation, caractérisé en ce que l'un des additifs est un mélange d'amidon, de gélatine et de polysaccharide et ce que le mélange de fromage à base de crème est chauffé à une température de 100 à 135°C.

4. Procédé selon la revendication 3, caractérisé en ce que l'additif est un mélange d'amidon modifié, de gélatine, de farine de caroube et de farine de guar.

5. Procédé selon l'une des revendications 3 et 4, caractérisé en ce que le mélange de fromage à base de crème est versé dans le matériau d'emballage alors qu'il est encore chaud, lequel matériau d'emballage est scellé immédiatement après remplissage.

6. Procédé selon la revendication 5, caractérisé en ce que le matériau d'emballage a été rendu stérile juste avant remplissage.